# EUROPÄISCHE PATENTSCHRIFT

(11) **EP 3 850 242 B1**
(45) Veröffentlichungstag und Bekanntmachung des Hinweises auf die Patenterteilung: **04.10.2023**
(21) Anmeldenummer: 19765973.3
(22) Anmeldetag: 29.08.2019
(51) Int. Cl.: F16F 9/46, F16K 27/04, F16K 31/06, F16K 31/122, F16K 31/124, F16K 31/42, F16K 3/316

(54) **PROPORTIONALVENTIL**
PROPORTIONAL VALVE
VANNE PROPORTIONNELLE

(30) Priorität: 13.09.2018 DE 102018122437
(43) Veröffentlichungstag der Anmeldung: 21.07.2021
(73) Patentinhaber: ETO MAGNETIC GmbH, 78333 Stockach (DE)
(72) Erfinder: BÜRSSNER, Jörg, 78234 Engen (DE); VINCON, Peter, 78333 Stockach (DE)
(74) Vertreter: Patent- und Rechtsanwälte Behrmann Wagner PartG mbB
(86) Internationale Anmeldenummer: PCT/EP2019/073131
(87) Internationale Veröffentlichungsnummer: WO 2020/052989

(56) Entgegenhaltungen:
- DE-A1-102012 103 300
- US-A- 4 178 768
- US-A- 6 152 178

## Beschreibung

Die vorliegende Erfindung betrifft ein elektromagnetisch und vorgesteuert betätigtes Proportionalventil nach dem Obergriff des Hauptanspruchs.

Eine derartige Vorrichtung ist in Form gängiger Elektromagnetventile, wie sie auch von der Anmelderin entwickelt und produziert werden, allgemein bekannt und weist üblicherweise einen durch eine elektromagnetische Aktuatorbaugruppe betätigten Ventilschieber auf, welcher dann, in der jeweils vorgesehenen Weise einen durch das Ventil (proportional) zu steuernden Fluidströmungspfad öffnet bzw. schließt. Dabei ist es insbesondere bekannt, entsprechend gesteuert zu öffnende bzw. zu schließende Öffnungen in einem Mantelbereich eines (üblicherweise in einer axialen Richtung langgestreckten) Ventilgehäuses anzuordnen, mit welchen dann ein im Ventilgehäuse innenseitig geführter Ventilschieber zusammenwirkt und entsprechend seiner Stellposition (welche elektromagnetisch durch die Aktuatorbaugruppe beeinflusst wird) den Ein- bzw. Auslass für das Nutzfluid (vollständig oder teilweise) freilegt.

Bei dieser als generisch und bekannt vorausgesetzten Technologie wird üblicherweise der Ventilschieber direkt und unmittelbar von der elektromagnetischen Aktuatorbaugruppe (genauer: von relativ zu stationären Spulenmitteln und als Reaktion auf eine Bestromung dieser Spulenmittel bewegbar geführten Ankermitteln) angetrieben, welche stirnseitig-einends auf die Ventilschiebereinheit wirken.

Gerade im Zusammenhang mit hohen Drücken im Nutzfluid ist jedoch häufig eine derartige direkte Ansteuerung impraktikabel oder gar technisch nicht realisierbar, sodass der Ventilschieber (Ventilschiebereinheit) eines solchen Wegeventils mittels einer sog. Vorsteuerung und damit indirekt durch Wirkung der elektromagnetischen Aktuatorabugruppe betätigt wird.

Auch diese Technologie ist als solche bekannt und wird insbesondere zur Vorsteuerung von gattungsgemäßen Ventilen im automobilen bzw. Nutzfahrzeugkontext verwendet, ist jedoch gleichermaßen nicht auf eine derartige Verwendung beschränkt. Hier wird mittels der elektromagnetischen Aktuatorbaugruppe ein Vorsteuerfluid gesteuert, welches dann seinerseits, über eine geeignete Druck- bzw. Angriffsfläche, auf die Ventilschiebereinheit wirkt, sodass diese dann den Ein- bzw. Auslass für das Nutzfluid gesteuert freilegen kann. Insbesondere steuert hier die Aktorbaugruppe einen Wirkdruck des Vorsteuerfluids, wobei eine rückstellende Kraft von Kraftspeichermitteln diesem entgegen wirkt.

Bereits eine derartige, im als bekannt vorausgesetzten Stand der Technik üblicherweise axial einends auf die Ventilschiebereinheit wirkende Vorsteuertechnologie erfordert bereits konstruktiven Aufwand insbesondere in der Lagerung der Ventilschiebereinheit im Ventilgehäuse entlang des durch die Ventilschiebereinheit zu beschreibenden Ventilhubes; es gilt insbesondere ein potentiell funktionshinderndes Verkanten oder Verspannen zu verhindern.

Zusätzliche Komplexität erhält die Lagerung der Ventilschiebereinheit durch eine denkbare Weiterbildung der (vorgesteuert) durch elektromagnetische Aktuatortechnologie angetriebenen Ventilschiebereinheit, wenn diese, üblicherweise aus einer (stromlos) stabilen axialen Mittelstellung im Ventilgehäuse, in beide axiale Richtungen jeweils vorgesteuert bewegt werden soll - damit aneinander entgegengesetzt, je nach Ansteuerung.

Eine derartige Lagerung einer Ventilschiebereinheit mit konventionellen Mitteln würde aufgrund der axial beidends der Ventilschiebereinheit sowie radial-mantelseitig gegenüber einem umgebenden Ventilgehäuse vorzunehmenden (Gleit-)Lagerung zu Lager-Überbestimmungen führen, welche entweder die Möglichkeiten einer Ansteuerung bzw. Dimensionierung einer derartigen Einheit stark einschränken oder gar gewisse konstruktive Varianten (wie etwa eine bidirektional-umschaltbare Vorsteuer-Fluidführung durch die Ventilschiebereinheit) unmöglich machen.

Die US 4,178,768 A zeigt ein Umsteuerventil nach dem Oberbegriff des Anspruchs 1 zum selektiven Leiten von Kühlmittel von einem Kompressor zu einem Klimaanlagen-/Wärmepumpensystem, umfassend: ein Gehäuse mit fünf Anschlüssen und einer Ventileinrichtung, um ein Fluid von dem Kompressor zu einem Kondensator zu leiten. Weiter umfasst das Ventil eine Betätigungseinrichtung zum Verändern der Stellungen der Ventileinrichtung, das mittels einer Vorsteuerkolbeneinrichtung verstellbar ist.

Die US 6,152,178 A zeigt ein Vierwege-Ventil zum Umschalten zwischen vier Rohren, umfassend: ein Ventilgehäuse, das einen gemeinsamen Hochdruckkanal in Verbindung mit einem ersten Rohr definiert; eine isolierte Niederdruckkammer, die mit einem zweiten Rohr in Verbindung steht; einen ersten Ventilsitz, der in einem Verbindungskanal zwischen einem Verbindungsabschnitt eines dritten Rohrs und dem gemeinsamen Hochdruckkanal ausgebildet ist; einen zweiten Ventilsitz, der zwischen einem Verbindungsabschnitt eines vierten Rohrs und dem gemeinsamen Hochdruckdurchgang ausgebildet ist; ein erstes und ein zweites hohlzylindrisches Ventilelement, die jeweils den ersten und zweiten Ventilsitz öffnen und schließen; ein Pilotventil, das mittels Druckregulierungskammern das erste und zweite hohlzylindrische Ventilelement axial bewegt.

Die DE 10 2012 103 300 A1 betrifft ein axial wirksames Rückschlagventil für ein Zentralventil eines Schwenkmotorverstellers. Dieses weist eine Hülse auf und sperrt einen Fluiddruck hin zu einer Ölpumpe.

Aufgabe der vorliegenden Erfindung ist es daher, ein elektromagnetisch und vorgesteuert betätigtes Proportionalventil nach dem Oberbegriff des Hauptanspruchs zu schaffen, welches konstruktiv im Hinblick auf seine Lager- und Führungseigenschaften im Ventilgehäuse verbessert ist, dabei insbesondere keinen durch Lager-Überbestimmung bewirkten Funktionsproblemen und/oder Dimensionierungseinschränkungen unterliegt und damit die Voraussetzungen für eine Realisierung eines axial beidseitig (beidends) vorgesteuert betreibbaren Ventilschiebers schafft, welcher in nahezu beliebiger Weise für die jeweils erforderlichen Druck-Angriffsflächen optimiert werden kann.

Die Aufgabe wird durch das elektromagnetisch und vorgesteuert betätigte Proportionalventil mit den Merkmalen des Hauptanspruchs gelöst; vorteilhafte Weiterbildungen der Erfindung sind in den Unteransprüchen beschrieben. Zusätzlich Schutz im Rahmen der Erfindung wird beansprucht für eine Verwendung eines derartigen elektromagnetisch und vorgesteuert betätigten Proportionalventils für die Fluidschaltung eines Nutzfluids in einem Kraftfahrzeug- und/oder Automobilkontext, wobei insbesondere eine Anwendung zur Fahrwerksregelung und/oder zur Einstellung eines Dämpfungssystems für ein Kraftfahrzeug besonders bevorzugt ist.

In erfindungsgemäß vorteilhafter Weise ist zunächst die erfindungsgemäße Ventilschiebereinheit im Ventilgehäuse so axial gleitend gelagert, dass einends, im Zusammenwirken mit einem stationären Führungsabschnitt des Ventilgehäuses, eine Gleitlagerung realisiert wird, wobei ein (bevorzugt zumindest abschnittsweise zylindrischer) Körperabschnitt der Ventilschiebereinheit gleitend mit dem stationären Führungsabschnitt zusammenwirkt, weiter bevorzugt diesen zum Ausbilden des Gleitlagers gleitend übergreift. Dabei ist der anspruchsgemäße "stationäre Führungsabschnitt" nicht notwendigerweise als einstückig-integraler Bestandteil des Ventilgehäuses zu verstehen, vielmehr ist es funktional im Rahmen der Erfindung ausreichend, wenn der anspruchsgemäße stationäre Führungsabschnitt, insbesondere in axialer Richtung (d.h. der Bewegungsrichtung der Ventilschiebereinheit im Gehäuse), in seiner Position festgelegt ist und insoweit die gleitende Relativbewegung des Körperabschnitts der Ventilschiebereinheit führt. Gleichwohl kann der Führungsabschnitt, konstruktiv elegant, auch als Bestandteil oder Verlängerung eines Spulenträgers für die Spulenmittel (günstig als Spritzteil gefertigt) ausgestaltet sein.

Dagegen ist erfindungsgemäß vorgesehen, dass am axial gegenüberliegenden Ende des Körperabschnitts, insoweit entsprechend einem gegenüberliegenden axialen Endabschnitt der Ventilschiebereinheit, eine radial spielbehaftete Lagerung der Ventilschiebereinheit im Gehäuse realisiert ist.

Zusätzlich unterstützt wird diese Maßnahme zur erfindungsgemäßen Vermeidung einer lagermäßigen Überberbestimmung der Lagerung der Ventilschiebereinheit im Ventilgehäuse durch das ergänzend erfindungsgemäße Merkmal, wonach die Ventilschiebereinheit radialseitlich bezogen auf das (umgebende) Ventilgehäuse mittels der ringartigen Dichtmittel abgestützt ist, wobei diese ringartigen Dichtmittel, üblicherweise mehrteilig und zum Ausbilden eines radial wirkenden variablen Spalts bzw. Spiels realisiert, eine Fluidabdichtung zu der mantelseitigen Innenwand des Ventilgehäuses realisieren.

Damit erreicht die vorliegende Erfindung in vorteilhafter Weise das Auflösen einer Lager-Überbestimmung, indem zwar durch die jeweiligen spielbehafteten Lagerbaugruppen (endseitiges (stirnseitiges) Lager des Körperabschnitts einerseits, ringartige Dichtmittel andererseits) die gewünschte und erforderliche Gleitlagerfunktionalität realisiert ist, andererseits jedoch, durch das jeweils vorgesehene radiale Spiel, die Gefahr eines Verkantens, Verklemmens oder dergleichen Funktionsstörung, insbesondere bei (wiederum bezogen auf die axiale Richtung) beidseitigem Vorsteuer-Druckeintrag auf die Ventilschiebereinheit, minimiert ist.

Erfindungsgemäß weiterbildend ist vorgesehen, dass die ringartigen, mehrteilig ausgebildeten Dichtmittel so an der Ventilschiebereinheit (genauer: dem weiter bevorzugt zylindrischen Körperabschnitt der Ventilschiebeeinheit) dichtend ansitzen, dass sie sich parallel zu dem als Ringflansch ausgebildeten Verschlussabschnitt erstrecken. Dieser wiederum greift vorteilhaft mit einem randseitigen Dichtbereich auf den Nutzfluid-Ein- bzw. Auslass, sodass die Axialbewegung der Ventilschiebereinheit, weiter bevorzugt bidirektional, das gesteuerte Freilegen dieser Öffnung bewirken kann.

Zusätzlich vorteilhaft und weiterbildend wird durch die ringartigen Dichtmittel ein Raum im Ventilgehäuse begrenzt, über welchen Vorsteuerfluid, von extern des Ventilgehäuses, in das Ventilgehäuse eintreten und eine Druckwirkfläche in Form einer ersten endseitigen Stirnfläche der Ventilschiebereinheit (am Körperabschnitt) entsprechend mit Vorsteuerfluiddruck beaufschlagen kann.

Im Rahmen der Erfindung ist es zudem vorgesehen, die spielbehaftete Lagerung des anderen Endes des Körperabschnitts (also das der Lagerung durch den stationären Führungsabschnitt axial gegenüberliegende Ende) mit einer Lagerbuchse auszugestalten, in welche das Ende des Körperabschnitts greift. Wenn dann diese Lagerbuchse auf einer axialen Endfläche, z.B. einer Stirnfläche des Ventilgehäuses, aufsitzt, kann eine Druckbeaufschlagung über diese Lagerbuchse - insbesondere, wie zusätzlich weiterbildungsgemäß vorgesehen, über einen Vorsteuerfluideinlass von Seiten der End- bzw. Stirnfläche - für eine zusätzliche Druckbeaufschlagung dieser Lageranordnung sorgen. Gleichzeitig entsteht so in der Buchse eine Druckangriffsfläche für dieses Vorsteuerfluid, etwa in Form einer endseitigen Stirnfläche des (wiederum hier auch bevorzugt zylindrischen) Abschnitts der Ventilschiebereinheit. Gegenüber dem stationären Führungsabschnitt ist hier jedoch die Lagerung, welche erfindungsgemäß mit der Lagerbuchse, wie beschrieben, realisiert ist, durch das Aufsitzen spielbehaftet - eine radiale Festlegung erfolgt an dieser Lagerstelle der Ventilschiebereinheit nicht.

Mit anderen Worten ist erfindungsgemäß vorgesehen, dass die am anderen Ende des Körperabschnitts ausgebildete spielbehaftete Lagerung eine das Ende bevorzugt radial und/oder außenseitig übergreifende Lagerbuchse aufweist.

In konstruktiv besonders günstiger und eleganter Weise ist es zudem weiterbildungsgemäß vorgesehen, die Ventilschiebereinheit in Form von Federmitteln an einer vorbestimmten Verschlussposition als Relativposition des Verschlussabschnittes zum Nutzfluid-Ein bzw. Auslass vorzuspannen, etwa der Gestalt, dass zwischen einem Paar von geeignet an die Ventilschiebeeinheit angreifenden Druckfedern eine derartige (Ruhe-)Position eingestellt ist. Diese entspricht insoweit dann auch der stromlos stabilen Position der Ventilschiebereinheit.

Konstruktiv ist es für die Ausgestaltung dieser Erfindungsvariante besonders günstig, mindestens eine dieser Druckfeder/n in einem (weiter bevorzugt hohlzylindrischen) Innenbereich des Körperabschnitts der Ventilschiebereinheit vorzusehen und etwa als Widerlager einen inneren Ringabsatz des Körperabschnitts vorzusehen.

Im Rahmen der vorstehend diskutierten Weiterbildung einer Lagerung des Körperabschnitts mit bodenseitiger Lagerbuchse würde dann etwa eine solche Lagerbuchse gleichermaßen eine solche Druckfeder abstützen können, sodass dann, weiter bevorzugt mittels zweiter, entgegengesetzt auf den Ringabschnitt greifender Druckfedern, diese stromlos-stabile Position definiert sein könnte. Die zweite Druckfeder wäre dann etwa geeignet von einem stationären Gehäuseabschnitt abzustützen.

Eine vorteilhafte Weiterbildung der Erfindung sieht vor, die erfindungsgemäße elektromagnetische Aktorbaugruppe - gesondert modular oder einstückig ansitzend - mit einem elektromagnetisch angetriebenen Anker im Bereich des stationären Führungsabschnitts des Ventilgehäuses anzuordnen, insbesondere und weiter bevorzugt diesen Anker von dem (etwa geeignet hohlzylindrisch ausgebildeten) Führungsabschnitt führen zu lassen.

Auf diese Weise ist dann zwischen dem Führungsabschnitt (bzw. dem darin dann in Form des Gleitlagers geführten Körperabschnitt der Ventilschiebereinheit) und dem Anker nicht nur ein Strömungsraum für Vorsteuerfluid ausgestaltbar, auch sieht eine bevorzugte Weiterbildung der Erfindung vor, den schieberartig bzw. als Ankerschieber ausgebildeten Anker zum Steuern eines Ein- und/oder Auslassquerschnitts für Vorsteuerfluid zu verwenden. Zu diesem Zweck kann insbesondere, in der Art einer verstellbaren Blendenöffnung zwischen Anker (Ankerschieber) einerseits und Führungsabschnitt des Ventilgehäuses andererseits, eine Anker-Relativposition diesen Ein- und/oder Auslassquerschnitt für das Vorsteuerfluid in der gewünschten Weise öffnen.

Besonders elegant wird diese Funktionalität dadurch noch erweitert, dass gemäß bevorzugter Realisierung der Erfindung als bidirektional vorgesteuertes Proportionalventil, also der Möglichkeit eines Eintrags eines Vorsteuerfluid-Drucks sowohl im axialen Endbereich des Führungsabschnitts der Ventilschiebeeinheit einerseits, als auch des gegenüberliegenden (spielbehaftet gelagerten) Endes andererseits, Vorsteuerfluid auf die Ventilschiebereinheit gebracht werden kann, etwa mittels geeigneter externer Umschaltung der jeweils zugeführten Vorsteuerfluide. Die beschriebene, weiterbildungsgemäß blendenartig zwischen dem Führungsabschnitt und dem Ankerschieber ausgebildete (und elektromagnetisch steuerbare) Öffnung würde insoweit dann für eine Fluiddurchströmung in beide Richtungen sorgen, ermöglicht durch die weiterbildungsgemäß vorteilhafte Eigenschaft der Ventilschiebereinheit (genauer: des bevorzugt hohlzylindrischen Körperabschnitts dieser Ventilschiebereinheit), axial in beide Richtungen für Vorsteuerfluid-Strömung durchlässig zu sein.

Auf die beschriebene Weise realisiert die vorliegende Erfindung somit eine hochgradig betriebssichere, konstruktiv und mechanisch einfach zu realisierende und nahezu universell verwendbare Proportionalventilvorrichtung, welche nicht nur bidirektional vorsteuerbar ist, sondern welche zudem zahlreiche Dimensionierungs- und Ausgestaltungsmöglichkeiten, insbesondere auch betreffend Vorsteuer-Druckflächen an der Ventilschiebereinheit, ermöglicht, ohne dass etwa im Betrieb nachteilige (und durch Überbestimmung entstehende) Verkantungs- bzw. Sperreffekte entstehen. Damit eignet sich die vorliegende Erfindung dann insbesondere auch für (Hochdruck-)Fluidsteuerungsanwendungen in einem Automobil- bzw. Kraftfahrzeug kontext, dies begrenzt jedoch nicht die Einsatzbreite der erfindungsgemäßen Technologie.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

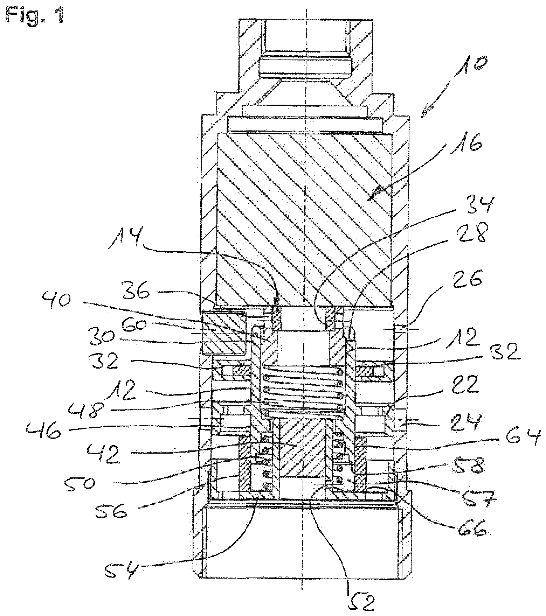

- Fig. 1: eine Längsschnittansicht durch das elektromagnetisch und vorgesteuert betätigte Proportionalventil im unbestromten Zustand der elektromagnetischen Aktuatorbaugruppe gemäß einem ersten Ausführungsbeispiel der Erfindung.

In einem Ventilgehäuse 10 des Proportionalventils ist eine Ventilschiebereinheit 12 axial bewegbar gelagert; die axiale Richtung entspricht der vertikalen Richtung der Figurenebene der Fig. 1 und insoweit einer Aktuator-Bewegungsrichtung einer (radialsymmetrischen) Ankerschiebereinheit (Ankerschieber) 14 einer im oberen Ende endseitig im Ventilgehäuse 10 vorgesehenen elektromagnetisch betätigten Aktuatorbaugruppe 16. In ansonsten bekannter Weise wird, gegen eine rückstellende Kraft von Federmitteln der Aktuatorbaugruppe 16, die Ankerschiebereinheit 14 als Reaktion auf eine Bestromung stationärer Spulenmittel axial bewegt (hier in der Figurenebene aufwärts und in Richtung auf nicht näher im Detail gezeigte stationäre Kernmittel der Aktuatorbaugruppe 16).

Die elektromagnetische Aktuatorbaugruppe 16 dient zur Realisierung eines elektromagnetisch betätigten Vorsteuerventils, mit welchem dann die Ventilschiebereinheit 12 zu deren Antrieb vorgesteurt wird. Genauer gesagt und zur Realisierung eines ersten Vorsteuerfluidpfades im Ventilgehäuse 16 und zum Antreiben der Ventilschiebereinheit in einer Abwärtsrichtung (wobei dann ein einstückig von der Ventilschiebereinheit 12 radial vorspringender Verschlussabschnitt 22 einen Nutzfluidein- bzw. auslass 24 in einem Mantelbereich des Ventilgehäuses 10 für das Dämpferfluid, insoweit entsprechend dem Hauptkreis, gesteuert freilegt) wird durch elektromagnetische Steuerwirkung der Aktuatorbaugruppe 16 in einen ersten Vorsteuerfluideinlass 26 (gleichermaßen mantelseitig im Ventilgehäuse 10 gebildet) eintretendes Vorsteuerfluid auf eine erste endseitige Stirnfläche 28 an einem endseitigen Körperabschnitt 30 der Ventilschiebereinheit 12 gebracht, sodass die (vor-)gesteuerte Abwärtsbewegung erfolgen kann.

Dabei wird der Vorsteuerdruck in einem durch eine (radial spielbehaftete) Dichtung 32 begrenzten Druckraum bestimmt bzw. beeinflusst durch einen mittels eines Blendenpaares 34, 36 gebildeten Vorsteuerfluid-Flussquerschnitt, welcher in seiner Querschnittsweite von einer aktuellen Ankerschieberposition der elektromagnetischen Aktuatorbaugruppe 16 beeinflusst ist. Genauer gesagt ist dieser Durchtrittsquerschnitt für das Vorsteuerfluid bestimmt durch ein gleitendes Überdecken zweier zylindrischer Abschnitte - eines (in der Querschnittsansicht der Fig. 1 innenliegenden) Abschnitt 34 des Ankerschiebers 14 einerseits, und einem radial außenliegenden stationären Führungsabschnitt 40 andererseits; dieser trägt die sich radial erstreckende Bohrung (Blende) 36, welche zum gleitenden Zusammenwirken mit dem Abschnitt 34 ausgebildet ist. Das Blendenpaar 34, 36 ist im gezeigten Ausführungsbeispiel so geometrisch zueinander fluchtend ausgerichtet, dass in der gezeigten stromlos stabilen Position (welche insoweit dann auch einer Fail-Safe-Position, nämlich bei Stromausfall oder dergleichen Störzuständen für die Aktuatorbaugruppe 16 entspricht) ein Durchfluss gesperrt ist, alternativ ein vorbestimmter Mindest-Vorsteuerfluidfluss durch einen Flussquerschnitt größer Null fließen kann.

Der einends durch den ersten Steuerfluideinlass 26 und im weiteren Verlauf durch das Blendenpaar 34, 36 beschriebene erste abwärtsgerichtete Vorsteuerfluid-Strömungspfad erstreckt sich zentrisch durch das Innere der Ventilschiebereinheit 12 und mündet bodenseitig der in Fig. 1 gezeigten Anordnung in als Rückschlagventil 42 ausgebildeten ersten Auslass-Ventilmitteln.

Entsprechend ermöglicht es die in Fig. 1 gezeigte Ausführung des Proportionalventils durch in den ersten Vorsteuerventileinlass eingebrachtes Vorsteuerfluid, die Ventilschiebereinheit 12 in einer Abwärtsrichtung gesteuert anzutreiben, wobei, durch Wirkung des angreifenden Vorsteuerfluids, die Ventilschiebereinheit aus ihrer durch ein Paar von beidseits an einen mittleren Ringabsatz 46 angreifenden Druckfedern 48, 50 bestimmten Mittelstellung ausgelenkt wird und, etwa zum Zweck einer Druckstufenbetätigung der Dämpfereinheit, den Ein- bzw. Auslass 24 öffnet.

Die Proportionalventilvorrichtung im Ausführungsbeispiel der Fig. 1 realisiert zusätzlich einen zweiten Vorsteuerfluid-Strömungspfad, welcher, der Strömungsrichtung des ersten Pfades axial entgegengerichtet und zum Ausüben einer in der Figurenebene in der Fig. 1 aufwärts gerichteten Antriebsbewegung auf die Ventilschiebereinheit 12, das Realisieren einer Zugstufe im beschriebenen Dämpfersystem ermöglicht, wiederum durch Vorsteuerung derselben elektromagnetischen Aktuatorbaugruppe 16.

Zu diesem Zweck ist ein zweiter Vorsteuerfluideinlass 52 in einem unteren bzw. Bodenbereich des Ventilgehäuses 10 ausgebildet. Auf einem stirnseitigen Gehäuseabschnitt 54 sitzt eine Lagerbuchse 56 (radial spielbehaftet) auf. Diese Lagerbuchse begrenzt radial einen Druckraum 57 des zweiten Vorsteuerfluideinlasses 52, sodass eintretendes Vorsteuerfluid auf eine zweite endseitige Stirnfläche 58 der Ventilschiebereinheit 12 (damit axial gegenüberliegend der ersten endseitigen Stirnfläche 28) druckbeaufschlagend greifen und entsprechend eine (in der Figurenebene der Fig. 1 aufwärts gerichtete) Verstellbewegung der Ventilschiebereinheit 12 zum Öffnen des Ein- bzw. Auslasses 24 bewirken kann. Durch den hohlen Innenraum der Ventilschiebereinheit 12 erstreckt sich der vom zweiten Vorsteuerfluideinlass begrenzte zweite Vorsteuerfluid-Strömungspfad bis zum Blendenbereich 34, 36, welche, mit ihrer durch die Aktuatorbaugruppe 16 gesteuerten Querschnittsweite, den Fluidfluss bis zu zweiten Auslassventilmitteln 60, wiederum realisiert als (hier mantelseitig am Ventilgehäuse 10 vorgesehenes) Rückschlagventil, öffnen.

Bei Bestromung der (nicht im Detail gezeigten) stationären Spulenmittel bewegt sich der Ankerschieber 14 entgegen der rückstellenden Kraft von Federmitteln axial aufwärts, woraufhin sich insbesondere die Überdeckung zwischen den Blenden 34, 36 ändert, insbesondere bei Bestromung der Aktuatorbaugruppe den Strömungsquerschnitt kontinuierlich öffnet, bis hin zu einer maximalen Öffnung.

Die Längsschnittansicht der Fig. 1 verdeutlicht zudem, wie das konstruktiv-geometrische Zusammenwirken insbesondere des stationären Führungsabschnitts 40, des Ankerschiebers 14 (mit endseitigem Ankerschieberabschnitt 38) und der mehrfach gelagerten Ventilschiebereinheit 12 nicht nur einfach herstellbar und verschleißarm und damit betriebssicher betrieben werden kann, auch wird durch eine elegante Lagertechnologie eine mögliche mechanische Überbestimmung aufgehoben und damit verschleißwirksam vermieden: Deutlich wird, dass im gezeigten Ausführungsbeispiel der stationäre Führungsabschnitt 40 im Gehäuse nicht nur (radial innenseitig) die Ankerschiebereinheit 14 führt. Auch bildet der Führungsabschnitt 40 ein Gleitlager für den den Führungsabschnitt 40 umgreifenden Körperabschnitt 30 der Ventilschiebereinheit 12 aus.

Axial gegenüberliegend ist die Ventilschiebereinheit 12 (radial) spielbehaftet gelagert - die Bezugszeichen 64 und 66 verdeutlichen diese mittels der beschriebenen Lagerbuchse 56 erreichte Lagerfreiheit, nämlich dadurch, dass die die Ventilschiebereinheit 12 gleitend umschießende Lagerbuchse 56 auf dem stirnseitigen Gehäusebereich 54 (lediglich) aufsitzt und nicht etwa dort radial festgelegt ist.

Zusätzlich spielbehaftet erfolgt eine radiale Abstützung bzw. Lagerung der Ventilschiebereinheit 12 durch die Ringeinheit 32 gegenüber der (hohlzylindrischen) Innenwand des Ventilgehäuses 10: Dieser mehrteilige Lagerring sorgt einerseits für die (zum Realisieren des Vorsteuerfluid-Strömungsraums notwendige) Dichtung, andererseits bewirken radial gegeneinander verschiebbare Ringelemente, dass - insoweit wiederum eine mechanische Überbestimmung vermeidend - ein radialer Kraftschluss zwischen Ventilschiebereinheit und Ventilgehäuse aufgehoben ist.

Die vorliegende Erfindung ist nicht auf den hier beschriebenen Kontext einer (doppelstufigen) Dämpfer-Druckregelung beschränkt, vielmehr eignet sich die Erfindung für jegliche Anwendungsfälle, bei welchen flexible Vorsteuer- und Konfiguriereigenschaften vorteilhaft eingesetzt werden können.

## Patentansprüche

1. Elektromagnetisch und vorgesteuert betätigtes Proportionalventil mit einer in einem Ventilgehäuse (10) entlang einer axialen Richtung bewegbar gelagerten Ventilschiebereinheit (12),
die durch eine axial einends vorgesehene elektromagnetische Aktuatorbaugruppe (16) zum vorgesteuerten Öffnen eines Nutzfluid-Ein- und/oder Auslasses (24) des Ventilgehäuses als Reaktion auf eine Bestromung stationärer Spulenmittel der Aktuatorbaugruppe antreibbar ist
und mit mechanischen Kraftspeichermitteln (48, 50) zusammenwirkt, insbesondere durch diese in einer stromlos stabilen axialen Position im Ventilgehäuse gehalten ist,
wobei die einen sich radial von einem Körperabschnitt (30) der Ventilschiebereinheit (12) erstreckenden Verschlussabschnitt (22) zum dichtenden Zusammenwirken mit dem an einer mantelseitigen Innenwand des Gehäuses (10) ausgebildeten Nutzfluid-Ein- bzw. Auslass (24) aufweisende Ventilschiebereinheit mit dem bevorzugt zylindrischen und/oder sich koaxial erstreckenden Körperabschnitt (30) zum Ausbilden eines axialen Gleitlagers axial einends mit einem Führungsabschnitt (40) des Ventilgehäuses zusammenwirkt und anderenends des Körperabschnitts (30) mit einer durch das Aufsitzen radial spielbehafteten axialen Lagerung (56) gelagert ist,
wobei bevorzugt ringartige Dichtmittel (32) einen Mantelabschnitt des Körperabschnitts radial spielbehaftet zu der mantelseitigen Innenwand des Ventilgehäuses abdichten,
**dadurch gekennzeichnet, dass**
der Führungsabschnitt (40) des Ventilgehäuses ein stationärer Führungsabschnitt ist, und dass die radial spielbehaftete axiale Lagerung eine das Ende des Körperabschnitts (30) bevorzugt radial und/oder außenseitig übergreifende Lagerbuchse (56) aufweist, wobei die Lagerbuchse (56) mit einem radialen Spiel gegenüber dem stationären Führungsabschnitt (40) gelagert ist.

2. Ventil nach Anspruch 1, **dadurch gekennzeichnet, dass** die mehrteilig ausgebildeten Dichtmittel (32) sich axial beabstandet und bevorzugt parallel zu dem ringflanschartig ausgebildeten Verschlussabschnitt (22) erstrecken.

3. Ventil nach Anspruch 1 oder 2, **dadurch gekennzeichnet, dass** in einen von den radialen Dichtmitteln (32) begrenzten Raum im Ventilgehäuse Vorsteuerfluid, insbesondere durch einen in der mantelseitigen Gehäusewand vorgesehenen ersten Vorsteuerfluideinlass (26), so einbringbar ist, dass eine erste endseitige Stirnfläche (28) der Ventilschiebereinheit mit Vorsteuerfluiddruck beaufschlagbar ist.

4. Ventil nach einem der Ansprüche 1 bis 3, **dadurch gekennzeichnet, dass** die Lagerbuchse (56) auf einem inneren Stirnabschnitt (54), insbesondere Stirnwandabschnitt, des Ventilgehäuses, unmittelbar oder mittelbar, aufsitzt.

5. Ventil nach einem der Ansprüche 1 bis 4, **dadurch gekennzeichnet, dass** die Lagerbuchse einen zweiten Vorsteuerfluideinlass (52) so anbietet, dass eine zweite endseitige Stirnfläche (58) der Ventilschieberbaugruppe (12) mit Vorsteuerfluiddruck beaufschlagbar ist
und/oder die Lagerbuchse (56) einen zum zweiten Vorsteuerfluideinlass (52) geöffneten Druckraum (57) ausbildet und/oder begrenzt, weiter bevorzugt radial begrenzt.

6. Ventil nach einem der Ansprüche 1 bis 5, **dadurch gekennzeichnet, dass** die Ventilschiebereinheit (12) durch axial beidends und/oder innenseitig angreifende Federmittel ( 48, 50), insbesondere in Form mindestens einer Druckfeder, vorgespannt und/oder gehalten ist, bevorzugt in einer Verschluss-Mittelstellung des Verschlussabschnitts (22) bezogen auf den Nutzfluid-Ein- bzw. Auslass (24).

7. Ventil nach einem der Ansprüche 1 bis 6, **dadurch gekennzeichnet, dass** im Ventilgehäuse die Aktuatorbaugruppe (16) axial im Bereich des stationären Führungsabschnitts (40) vorgesehen ist und insbesondere ein durch die Bestromung der Spulenmittel bewegter Ankerschieber (14) durch den und/oder im stationären Führungsabschnitt geführt ist.

## Claims

1. A proportional valve actuated electromagnetically and in a pilot-operated manner having a valve slide unit (12) mounted in a valve housing (10) so as to be movable along an axial direction,
the valve slide unit (12) being drivable by an electromagnetic actuator assembly (16) provided axially at one end for the pilot-operated opening of a usage fluid inlet and/or outlet (24) of the valve housing in response to an energization of stationary coil means of the actuator assembly and interacting with mechanical force storage means (48, 50), in particular being held in a currentless stable axial position in the valve housing by said force storage means (48, 50),
wherein
the valve slide unit which has a closure section (22) which extends in the radial direction from a body section (30) of the valve slide unit (12) for sealing interaction with the usage fluid inlet or outlet (24) realized on an inner wall of the housing (10) on the shell side interacts with a guide section (40) of the valve housing via the preferably cylindrical and/or coaxially extending body section (22) axially at one end in order to realize an axial sliding bearing and is mounted at the other end of the body section (30) by an axial bearing (56) having radial play due to its resting thereon,
wherein preferably ring-shaped sealing means (32) seal a shell section of the body section with radial play relative to the inner wall of the valve housing on the shell side,
**characterized in that**
the guide section (40) of the valve housing is a stationary guide section and **in that** the axial bearing having radial play has a bearing bush (56) engaging the end of the body section (30), preferably in the radial direction and/or on the outside, wherein the bearing bush (56) is mounted with a radial play with respect to the stationary guide section (40).

2. The valve according to claim 1, **characterized in that** the sealing means (32) realized in multiple parts extend so as to be axially spaced apart and preferably parallel to the ring-flange-like closure section (22).

3. The valve according to claim 1 or 2, **characterized in that** a pilot control fluid is introducible into a space in the valve housing limited by the radial sealing means (32), in particular through a first pilot control fluid inlet (26) provided in the housing wall on the shell side, in such a manner that pilot control fluid pressure is able to be applied to a first end face (28) of the valve slide unit.

4. The valve according to any one of claims 1 to 3, **characterized in that** the bearing bush (56) rests directly or indirectly on an inner front section (54), in particular a front wall section, of the valve housing.

5. The valve according to any one of claims 1 to 4, **characterized in that** the bearing bush provides a second pilot control fluid inlet (52) in such a manner that pilot control fluid pressure is able to be applied to a second end face (58) of the valve slide assembly (12)
and/or **in that** the bearing bush (56) forms and/or limits, further preferably radially limits, a pressure chamber (57) opened towards the second pilot control fluid inlet (52).

6. The valve according to any one of claims 1 to 5, **characterized in that** the valve slide unit (12) is preloaded and/or held, preferably in a closure central position of the closure section (22) relative to the usage fluid inlet and/or outlet (24), by spring means (48, 50), in particular in the form of at least one pressure spring, axially engaging both ends and/or the inside.

7. The valve according to any one of claims 1 to 6, **characterized in that**, in the valve housing, the actuator assembly (16) is provided axially in the area of the stationary guide section (40)
and, in particular, an armature slide (14) moved by the energization of the coil means is guided through the and/or in the stationary guide section.

## Revendications

1. Vanne proportionnelle actionnée électromagnétiquement et de manière pilotée ayant une unité (12) de tiroir de vanne montée dans un boîtier de vanne (10) de manière à être mobile le long d'une direction axiale, ladite unité (12) de tiroir de vanne étant entraînable par un ensemble d'actionneur (16) électromagnétique prévu axialement à une extrémité pour ouvrir de manière pilotée une entrée et/ou sortie (24) de fluide d'utilisation du boîtier de vanne en réponse à une alimentation en courant de moyens de bobine fixes de l'ensemble d'actionneur et interagissant avec des moyens (48, 50) d'accumulateur de force mécaniques, notamment étant retenue par lesdits moyens (48, 50) d'accumulateur de force mécaniques dans une position axiale et stable et sans courant dans le boîtier de vanne,
l'unité de tiroir de vanne qui a une partie de fermeture (22) qui s'étende radialement à partir d'une partie de corps (30) de l'unité (12) de tiroir de vanne pour l'interaction étanche avec l'entrée ou la sortie (24) de fluide d'utilisation réalisée sur une paroi intérieure du boîtier de vanne (10) du côté de l'enveloppe interagissant axialement à une extrémité avec une partie de guidage (40) du boîtier de vanne via la partie de corps (30), qui est de préférence cylindrique et/ou s'étend coaxialement, pour réaliser un palier lisse axial
et étant montée à l'autre extrémité de la partie de corps (30) par un palier axial (56) ayant du jeu radial à cause de l'appui,
des moyens d'étanchéité (32), qui sont de préférence en forme d'anneau, étanchéifiant une partie d'enveloppe de la partie de corps avec du jeu radial par rapport à la paroi intérieure du boîtier de vanne du côté de l'enveloppe,
**caractérisée en ce que**
la partie de guidage (40) du boîtier de vanne est une partie de guidage fixe, et
**en ce que** le palier axial ayant du jeu radial a un coussinet (56) qui est en prise sur l'extrémité de la partie de corps (30), de préférence radialement et/ou sur le côté extérieur, le coussinet (56) étant monté avec du jeu radial par rapport à la partie de guidage (40) fixe.

2. Vanne selon la revendication 1, **caractérisée en ce que** les moyens d'étanchéité (32) réalisés en plusieurs parties s'étendent de manière à être axialement espacés et, de préférence, parallèlement par rapport à la partie de fermeture (22) en forme de bride annulaire.

3. Vanne selon la revendication 1 ou 2, **caractérisée en ce que** du fluide à commande pilote est capable d'être introduit dans un espace dans le boîtier de vanne limité par les moyens d'étanchéité (32) radiales, notamment à travers une première entrée (26) de fluide à commande pilote prévue dans la paroi de boîtier du côté de l'enveloppe, de manière qu'une première face d'extrémité (28) de l'unité de tiroir de vanne est capable d'être alimentée en pression de fluide à commande pilote.

4. Vanne selon l'une quelconque des revendications 1 à 3, **caractérisée en ce que** le coussinet (56) prend directement ou indirectement appui contre une partie frontale (54) intérieure, notamment une partie de paroi frontale, du boîtier de vanne.

5. Vanne selon l'une quelconque des revendications 1 à 4, **caractérisée en ce que** le coussinet prévoit une deuxième entrée (52) de fluide à commande pilote de manière qu'une deuxième face d'extrémité (58) de l'ensemble (12) de tiroir de vanne est capable d'être alimentée en pression de fluide à commande pilote
et/ou **en ce que** le coussinet (56) forme et/ou limite, plus préférentiellement limite radialement, une chambre de pression (57) ouverte vers la deuxième entrée (52) de fluide à commande pilote.

6. Vanne selon l'une quelconque des revendications 1 à 5, **caractérisée en ce que** l'unité (12) de tiroir de vanne est précontrainte et/ou retenue, de préférence dans une position centrale de fermeture de la partie de fermeture (22) par rapport à l'entrée et/ou la sortie (24) de fluide d'utilisation, par des moyens de ressort (48, 50), notamment sous la forme d'au moins un ressort de compression, qui viennent en prise aux deux extrémités et/ou sur le côté intérieur.

7. Vanne selon l'une quelconque des revendications 1 à 6, **caractérisée en ce que**, dans le boîtier de vanne, l'ensemble d'actionneur (16) est prévu axialement dans la zone de la partie de guidage (40) fixe et, notamment, un tiroir d'induit (14) mû par l'alimentation en courant des moyens de bobine est guidé à travers la et/ou dans la partie de guidage.
